# EUROPEAN PATENT SPECIFICATION

(11) **EP 1 598 815 B1**
(45) Date of publication and mention of the grant of the patent: **19.11.2008**
(21) Application number: 04011692.3
(22) Date of filing: 17.05.2004
(51) Int. Cl.: G11B 7/00, G06K 19/00

(54) **Optical data carrier, method for producing an optical data carrier and a device for producing an optical data carrier**
Optischer Datenträger, Verfahren und Vorrichtung zur Herstellung eines optischen Datenträgers
Support de données optiques, procédé et dispositif de production d' un support de données optiques

(43) Date of publication of application: 23.11.2005
(73) Proprietor: Sony DADC Austria AG, 5081 Anif (AT)
(72) Inventor: Reiter, Gottfried, 5081 Anif (AT); Maier, Johann, 5081 Anif (AT)
(74) Representative: Müller - Hoffmann & Partner

(56) References cited:
- EP-A- 0 997 892
- WO-A-03/107337
- GB-A- 2 349 501
- US-A- 5 862 117
- US-A- 6 044 046
- US-A1- 2003 205 622
- US-B1- 6 542 444

## Description

The present invention relates to an optical data carrier comprising an information carrying electrically conductive layer and a chip, wherein an antenna element is integrated into the optical data carrier for transferring data and/or energy between the chip and an external device. Further, the present invention relates to a method for producing such an optical data carrier as well as a device for producing the optical data carrier.

Optical data carriers with information stored on one or both sides thereof have become to be used for a variety of purposes, most notably in the music, games, video and computer industry. Digital information is stored on the optical data carrier in the form of pits arranged along circular, concentric tracks on one or on both sides of the carrier. The track is typically read from the inside out but may also be read from outside in, as it is already used for some optical storage media.

Most common are two types of optical data carriers, namely CD and DVD. It now has been recognized, that such CDs or DVDs, which are sold in stores, are often stolen such, that people are slicing open the package of the disc and taking out only the disc. Thus, security devices, which are placed on the package or the box of the disc are bypassed and do not provide enough security for the stores.

Furthermore, it would be desirable to have a simple and cheap identification means arranged directly on a disc which may not be noticed from the outside.

US 6.542.444 B1 discloses a data carrier capable of storing information data in optically readable formats. The data carrier includes a metal layer arranged in a plastic body which carries information in a CD or DVD format. Furthermore, the data carrier comprises strips formed in the metal layer which should run along the edge of the plastic body in order to minimize the reduction of the readable area. Said strips may function as an antenna for data and/or energy transfer.

In view of the above, it is an object underlying the present invention to provide an improved optical data carrier preferably haying an additional security device/data device integrated on the optical data carrier.

A further object of the present invention is to provide a method of producing an optical data carrier having improved security/ data characteristics and a device for producing such optical data carriers.

According to the present invention, this object is solved by an optical data carrier, a method and a device having the features of independent claims 1, 16 and 20, respectively. Preferred embodiments of the invention are defined in the respective dependent claims.

According to the inventive optical data carrier, the optical data carrier comprises an information carrying electrically conductive layer, which is arranged on a base material. Further, the optical data carrier comprises a chip connected to the information carrying conductive layer. The conductive layer is configured as an antenna element for transferring data and/or energy between the chip and an external device. Thereby, the conductive layer comprises at least one non-conductive portion. Thus, according to the present invention, the information carrying electrically conductive layer is used as the antenna element. Therefore, according to the present invention, it is not necessary to provide a separate antenna element. In other words, the antenna element is an integrative part of the optical data carrier and the antenna element is provided by parts existing in the optical data carrier anyway. Consequently, production costs of the inventive optical data carrier can be significantly reduced. For example, the chip can be provided with specific circuits sending a signal, if the optical data carrier is for example transported separately without the box out of a store. Further, the chip can be provided such, that if a customer pays for the data carrier at the cashier a signal sent by the chip can be restrained or amended by the cashier, so that no alarm will be given, if the customer leaves the shop. According to a preferred embodiment, the chip is an IC-element or a RFID-element (Radio Frequency Identification). The antenna element of such RFID-elements is the information carrying electrically conductive layer of the optical data carrier. Thereby, active and passive RFID-elements can be used.

Preferably, the transfer of data and/or energy is an inductive transfer. Thereby, the information carrying conductive layer comprises one or several loops formed by the provision of the non-conductive portion. Preferably, the non-conductive portion is in the form of a circle crossing the concentric tracks of the optical data carrier several times, preferably in an acute angle. Thus, the antenna element has the shape of one or several open rings. The chip is connected to both ends of the open ring and is preferably arranged between the two ends of the open ring.

According to a further preferred embodiment of the invention, the non-conductive portion is located adjacent to a center opening of the optical data carrier. According to another preferred embodiment of the present invention, the non-conductive portion is located adjacent to an outer edge of the optical data carrier. That is, due to the positioning of the non-conductive portion close to the center opening or close to the edge, only a few loops of the information carrying track are cut by the non-conductive portion, so that the information quality of the optical data carrier is still very high.

According to a further different embodiment of the present invention, the non-conductive portion is configured as a straight line, which begins at the inner part of the electrically conductive layer and ends at the outer edge of the electrically conductive layer. That is, the whole information carrying conductive layer is used as antenna element. Thus, the non-conductive portion can be manufactured very easily.

According to a further preferred embodiment of the present invention, the transfer of data and/or energy is a capacitive transfer. Thereby, the information carrying conductive layer is separated by the non-conductive portion into at least two parts.

Preferably, the non-conductive portion has a ring-like shape and separates the electrically conductive layer into two ring-like parts. More preferably, the two ring like parts are concentric to each other.

Further preferably, the non-conductive portions are configured as at least two straight lines dividing the information carrying conductive layer into at least two separate parts. That is the two parts are electrically not connected. The line-like non-conductive portions separate the information carrying layer from the inner to the outer edge. Preferably, the two line-like non-conductive portions are arranged in an angle to each other for separation the conductive layer into two ring sector parts. According to another embodiment of the invention, the two non-conductive portions are arranged such, that they face each other and lie on a common line incorporating a center point of the disc, so that the two separate parts of the conductive layer have the same size. Thus, the inventive antenna element has the shape of two half ring sectors.

Further preferred, the chip is arranged close to the center opening, so that the optical data carrier only has a slight unbalance due to the weight of the chip. Thus, an unbalance is hardly noticeable.

According to a further preferred embodiment of the present invention, an additional counter weight is provided on the optical data carrier to balance the unbalance due to the provision of the chip. It has to be noted, that the counter weight also may be a second chip providing additional functional options to the data carrier.

Further preferable, the chip is connected to the information carrying conductive layer by means of a conductive adhesive. Thus, an electrical connection between the chip and the electrically conductive layer can be easily provided at low costs. According to another preferred embodiment, a connection between the chip and the antenna element can be realized by means of mechanical contacts.

Further preferable, the optical data carrier comprises a first electrically conductive layer and a second electrically conductive layer, wherein the second electrically conductive layer is arranged parallel to the first electrically conductive layer. The second conductive layer also carries information and may be a semi-reflective layer (DVD which can be read from one side) or may be a second conductive layer of a DVD, which has to be flipped. Thereby, the first and/or the second electrically conductive layer are configured as an antenna element for transferring data and/or energy.

Preferably, the non-conductive portion has a width of less than 300 µm, preferably less than 100µm, further preferably approximately 75 µm. This ensures, that when using the optical data carrier, the loss of information due to the non-conductive portion is not remarkable.

The optical data carrier is preferably a CD or a DVD or a SACD or a Blu-ray disc.

According to the inventive method for producing an optical data carrier comprising an information carrying electrically conductive layer arranged on a base material, the method comprises the steps of:
- applying the electrically conductive layer on the base material,
- removing metal material of the electrically conductive layer for providing at least one non-conductive portion in the electrically conductive layer, and
- fixing a chip to the electrically conductive layer, preferably by means of a conductive adhesive.

Preferably, if the optical data carrier is a CD, a surface layer, preferably a protective lacquer, is applied over the electrically conductive layer and the chip. It has to be noted, that the thickness of the chip either has to be smaller than the thickness of the surface layer or that the chip is placed at least partly in a recess, formed in the base material of the optical data carrier. Thus, a protruding portion at the position of the chip can be prevented.

If the optical data carrier is a DVD, preferably the chip can be placed between the two halfs of the DVD and can be embedded into a bonding layer for bonding the two halfs of the DVD together.

According to a further preferred method of the present invention, the metal material of the electrically conductive layer for providing the non-conductive portion is removed by means of a laser.

According to a further preferred embodiment of the inventive method, there is provided an additional step before the step of applying the metal, wherein the additional step is to place a line-like auxiliary element on the base material. The line-like auxiliary element is also covered with metal when applying the metal material. Then, the line-like auxiliary element is removed, thereby producing the non-conductive portion of the electrically conductive layer. For example the line-like auxiliary element may be a wire, a thread or an adhesive tape.

The inventive device for producing an optical data carrier comprises a device for applying metal material for the electrically conductive layer on a base layer and a device for partially removing the electrically conductive layer for providing the at least one non-conductive portion.

Preferably, the device for partially removing the electrically conductive layer is a laser or a line-like element, which is removed after applying the electrically conductive layer on the basis layer.

The present invention can be used in different ways, depending on the design of the chip. For example, the present invention can be used as an anti-theft protection, an identification means for an access to game consoles, e.g. PlayStations, a protection against copying, or as a means for watching discs in a supply chain or in ware housing.

All different aspects of the present invention as set-out above and further elucidated below might be combined in any way. The accompanying drawings, which are incorporated in and constitute a part of the specification, illustrate an exemplary embodiment of the invention and, together with a general description of the invention given above, and the detailed description of the embodiments given below, serve to explain the principles of the invention, wherein:
- **Fig. 1**: shows a simplified view of an optical data carrier according to a first embodiment of the invention,
- **Fig. 2**: shows a simplified view of an optical data carrier according to a second embodiment of the present invention,
- **Fig. 3**: shows a simplified view of an optical data carrier according to a third embodiment of the present invention,
- **Fig. 4**: shows a simplified view of an optical data carrier according to a fourth embodiment of the present invention,
- **Fig. 5**: shows a simplified sectional view of an optical data carrier according to a fifth embodiment of the present invention,
- **Fig. 6**: shows a simplified view of an optical data carrier according to a sixth embodiment of the present invention,
- **Fig. 7**: shows a simplified view of an optical data carrier according to a seventh embodiment of the present invention,
- **Fig. 8**: shows a simplified view of an optical data carrier according to an eighth embodiment of the present invention,
- **Fig. 9**: shows a simplified view of an optical data carrier according to a ninth embodiment of the present invention,
- **Fig. 10**: shows a simplified view of an optical data carrier according to a tenth embodiment of the present invention, and
- **Fig. 11**: shows a simplified view of an optical data carrier according to an eleventh embodiment of the present invention.

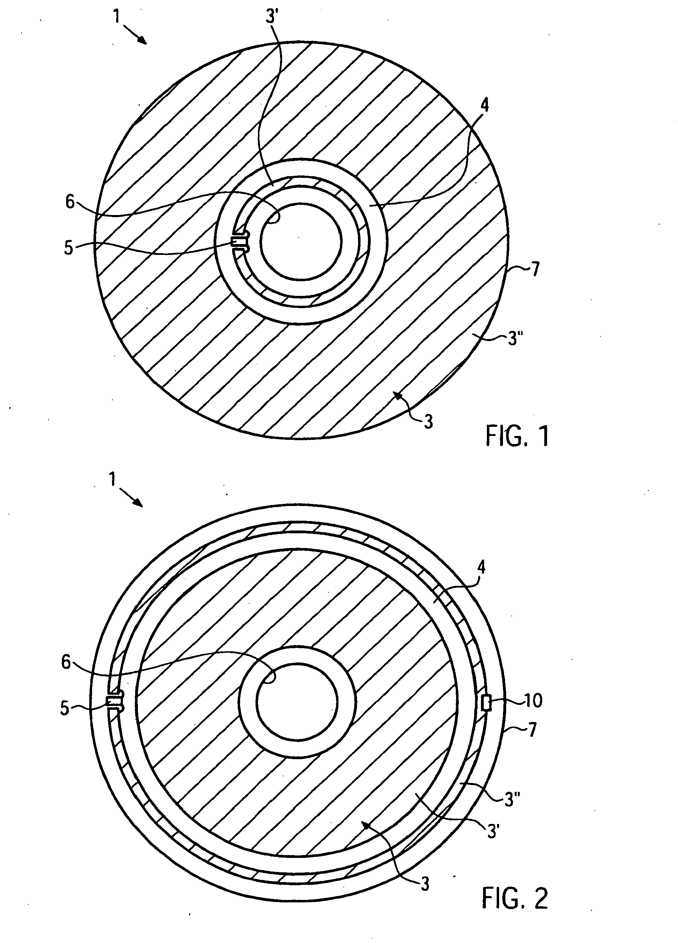

Fig. 1 shows an optical data carrier 1 according to a first embodiment of the present invention. The illustration of Fig. 1 and the other figures of further embodiments show the principles of the present invention. The optical data carrier 1 comprises a electrically conductive layer 3, which is arranged on a base material, which is not shown. The electrically conductive layer 3 is an information carrying conductive layer and the optical data carrier 1 is a CD or a DVD or a Blu-ray disc.

Further, as shown in Fig. 1, the information carrying conductive layer 3 comprises a non-conductive portion 4. The non-conductive portion 4 is located in a vicinity of a center opening 6 of the optical data carrier. The non-conductive portion 4 has substantially a shape of a circle.

Further, the optical data carrier 1 comprises a chip 5, for example in the form of a RFID-element. The chip 5 is used for an identification by means of radio frequency. In this embodiment, the chip 5 has the function of an identification of the optical data carrier 1 to avoid a theft of the optical data carrier in a shop. At the cashier, the chip 5 can be deactivated to avoid that a customer, who bought the optical data carrier legally, will not activate an alarm when he will leave the shop with the optical data carrier. However, if the optical data carrier is not deactivated, an alarm will be activated, if the optical data carrier is taken out of the shop.

The chip 5 is fixed to the electrically conductive layer 3 and connected to an open ring-like part 3' of the conductive layer 3. As shown in Fig. 1, the conductive layer 3 is separated into two parts 3', 3", wherein the inner ring-like part 3' is used as antenna element for the chip 5 . The chip 5 is arranged between two ends of the open ring-like part 3'. The circle-like non-conductive portion 4 crosses a non-shown track of the information carrying conductive layer 3. However, since the non-conductive portion 4 has a very small width a customer will not recognize that due to the non-conductive portion 4 some information of the track is missing, since the players on which the optical data carrier is used, can interpolate the missing information. Thus, according to the present invention, the chip 5 uses the electrically conductive layer 3 as an integrated antenna element to transfer data and/or energy to/from an external device and the quality of the optical data carrier is not remarkably reduced. In the first embodiment, the antenna element comprises one loop and is configured for an inductive transfer of data and/or energy. Thus, the antenna element (Part 3') has an open ringlike shape. Thus, according to the present invention, no separate additional antenna element is necessary, since the yet existing electrically conductive layer 3 is used as antenna element. Therefore, the production costs of an optical data carrier 1 according to the present invention can be significantly reduced. Furthermore, the number of parts can be reduced and the optical data carrier has a simple structure.

The circle-like non-conductive portion 4 can be made for example by means of a laser, after the electrically conductive layer has been applied on the base material. After the non-conductive portion 4 has been formed, the chip 5 is fixed to the electrically conductive layer 3 thus that the chip 5 uses one loop of the conductive layer as a ring-like antenna element. The antenna element is the result of the formation of the non-conductive portion 4. Thus, the chip can use an inductive transfer having one loop. After the chip has been applied to the electrically conductive layer, in case of a CD, a protective layer is applied over the conductive layer and the chip. It has to be noted, that the protective lacquer of a CD usually has a thickness of 5 to 10 µm and the chip 5 has a thickness of approximately 40 µm. Therefore, the chip is arranged in a recess formed in the base material and so that after applying of the protective lacquer it can be ensured, that the surface of the optical data carrier 1 has an even shape and no protruding portion at the position of the chip 5. If the optical data carrier is a DVD, the chip 5 is placed between the two halfs of the DVD and can be embedded into the layer connecting the two halfs of the DVD.

Next, referring to Fig. 2, an optical data carrier 1 according to a second embodiment of the present invention is described. The optical data carrier 1 of the second embodiment mainly corresponds to the optical data carrier of the first embodiment and parts having the same technical function have the same reference numbers as in the first embodiment. The optical data carrier of the second embodiment also uses an inductive transfer of data and/or energy.

Contrary to the first embodiment, the optical data carrier 1 according to the second embodiment has a non-conductive portion 4, which is arranged adjacent to an outer edge 7 of the optical data carrier 1. The non-conductive portion 4 also has a circle-like shape. Thus, as shown in Fig.2, the antenna element has the form of an open ring 3" and is located adjacent to the outer edge 7 of the disc. Similar to the first embodiment, the chip 5 is arranged in a slit of the antenna element and uses the electrically conductive layer 3 as an integrated antenna for transferring data and/or energy. Furthermore, to avoid unbalance problems due to the weight of the chip 5, a counter-weight 10 is arranged at a position opposite of the chip 5 on the optical data carrier 1. It has to be noted, that the counter-weight 10 may be a simple weight or also may be a second chip having the same or an additional function. In the other respects, the second embodiment corresponds to the first embodiment, so that it can be referred to the description of the first embodiment.

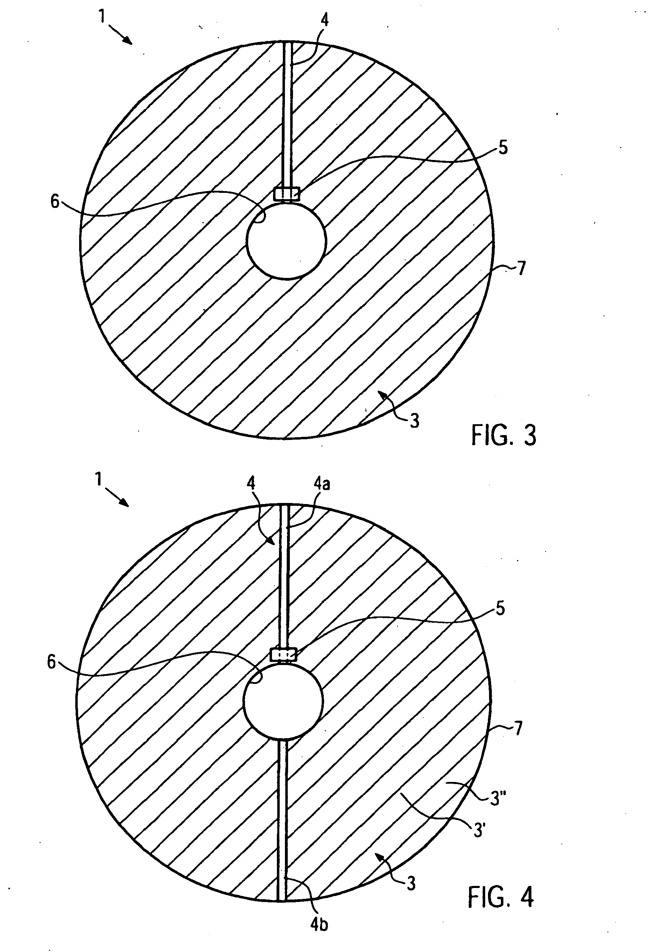

Next, referring to Fig. 3, an optical data carrier 1 according to a third embodiment will be described. In Fig. 3, parts having the same technical function, are denoted with the same reference signs as in the first and second embodiment.

The optical data carrier 1 according to the third embodiment mainly corresponds to the optical data carriers described in the first and second embodiment. The optical data carrier 1 according to the third embodiment also uses an inductive transfer for transferring data and/or energy. As shown in Fig. 3, the chip 5 is arranged directly adjacent to the center opening 6. The non-conductive portion 4 starts at the center opening 6 and reaches up to the outer edge 7. It has to be noted, that the chip 5 may also be fixed close to the outer edge of the optical data carrier. However, due to the unbalance problem, it is preferred, that the chip 5 is arranged close to the center opening 6 of the optical data carrier 1. As shown in Fig. 3 the chip 5 has a size greater than the width of the non-conductive portion and overlaps the non-conductive portion 4.

In the third embodiment, the non-conductive portion 4 is only one simple straight line in radial direction of the optical data carrier. The track of the electrically conductive layer is mainly cut perpendicular by the non-conductive portion. The chip 5 uses the whole remaining electrically conductive layer 3 as an integrative antenna element. Thus, the structure of the third embodiment is very simple.

Next, referring to Fig. 4, an optical data carrier 1 according to a fourth embodiment of the invention will be described. In Fig. 4, same reference signs indicate the same parts as in the previously described embodiments.

Contrary to the first to third embodiment, the optical data carrier 1 according to the fourth embodiment uses a capacitive transfer of data and/or energy. As shown in Fig. 1, the non-conductive portion comprises a first non-conductive portion 4a and a second non-conductive portion 4b. The non-conductive portions 4a and 4b are arranged on a line going through a center point of the optical data carrier 1. A chip 5 is arranged adjacent to the center opening 6 at the first non-conductive portion 4a. Thus, as shown in Fig. 4, the information carrying electrically conductive layer 3 is divided into two halfs 3', 3" having an identical size. The non-conductive portions 4a, 4b have a width of approximately 75 µm. Since the non-conductive portions 4a, 4b are crossing the track of the electrically conductive layer 3 mainly a perpendicular direction, no disadvantageous effects can be recognized, when a customer uses the optical data carrier 1.

It has to be noted, that the two non-conductive portions 4a, 4b do not have to be necessarily on a line through the center of the optical data carrier. The two non-conductive portions 4a, 4b may also be arranged such, that they cut the electrically conductive layer 3 in two parts, having different sizes. Furthermore, there might be also used more than two non-conductive portions 4a, 4b reaching from the center opening 6 to the outer edge 7, so that the electrically conductive layer 3 is divided in several, electrically not connected parts corresponding to the number of non-conductive portions. The parts have the shape of ring sectors having a circumferential length depending on the number of non-conductive portions. If two non-conductive portions are provided, there are formed two halfs of a ring, as shown in Fig. 4.

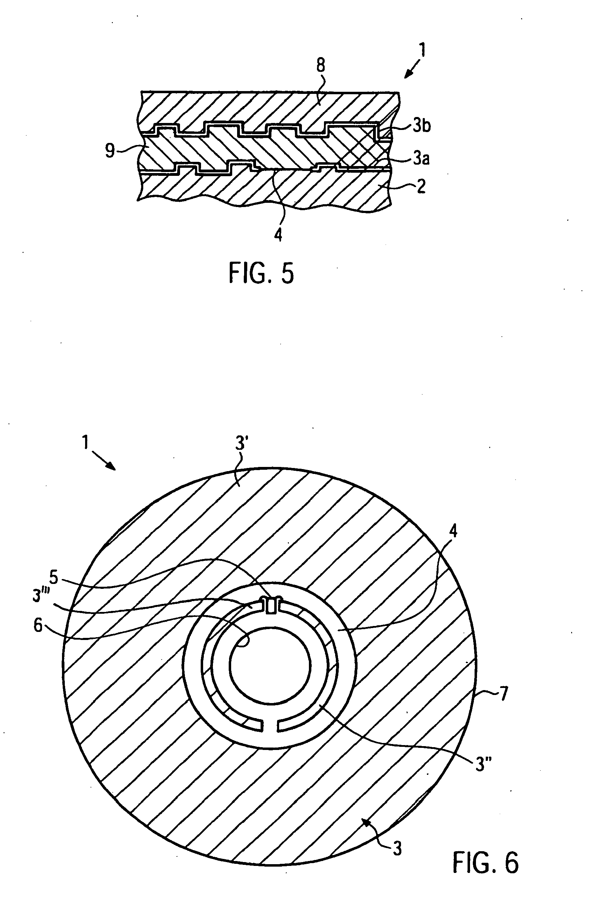

Fig. 5 shows an optical data carrier 1 according to a fifth embodiment of the present invention. Similar to the previously described embodiments, same reference signs denote same technical parts throughout the fifth embodiment.

The optical data carrier 1 according to the fifth embodiment is a DVD having two information carrying electrically conductive layers. More in detail, there is provided a first information carrying conductive layer 3a and a second information carrying conductive layer 3b, wherein the second conductive layer 3b is a semi-reflective conductive layer. The first conductive layer 3a is part of a first half of the DVD and is arranged on a base material 2 and the second conductive layer 3b is arranged above the first conductive layer 3a, having a bonding layer 9 or an adhesive layer therebetween. The second conductive layer 3b is part of a second half of the DVD as it is well-known in the state of the art. Reference sign 8 denotes a protective layer. As shown in Fig. 5, a non-conductive portion 4 is provided in the first electrically conductive layer 3a and a chip (not shown) is arranged on the first electrically conductive layer 3a. Thus, the chip uses the first electrically conductive layer 3a as an integral antenna element for transferring data and/or energy. Thus, the chip is arranged between the two halfs of the DVD embedded in the bonding layer for connecting the two parts of the DVD. Depending on the layout of the non-conductive portion 4, as described in the previous embodiments, the transfer of data and/or energy may be an inductive or a capacitive transfer.

Furthermore, it has to be noted, that the chip may be arranged in a recess provided either in the base material 2 or in the bonding layer 9. For an easier manufacturing process, preferably the chip is fixed on the first conductive layer 3a after the metal material has been applied and the non-conductive portion has been provided on the base material and afterwards the bonding layer 9 is applied on the first conductive layer 3a and the chip, so that no additional manufacturing step is necessary to form a recess for accommodating the chip.

Fig. 6 shows an optical data carrier 1 according to a sixth embodiment of the present invention. Similar to the previously described embodiments, same reference signs denote same technical parts throughout the sixth embodiment.

The optical data carrier according to the sixth embodiment also uses a capacitive transfer of data and/or energy. As shown in Fig. 6, the information carrying conductive layer 3 is separated into three parts 3', 3" and 3"'. Thereby the parts 3" and 3'" form the antenna element of the chip 5. The two parts 3" and 3'" have the shape of a half ring, respectively. The chip 5 is connected to the two parts 3" and 3'" and is arranged in a space between the two ring halfs (cf. Fig. 6). It has to be noted, that according to another embodiment the non-conductive portion 4 may also be arranged close to the outer edge 7 of the optical data carrier and thus the two half ring parts of the conductive layer are arranged adjacent to the outer edge of the data carrier.

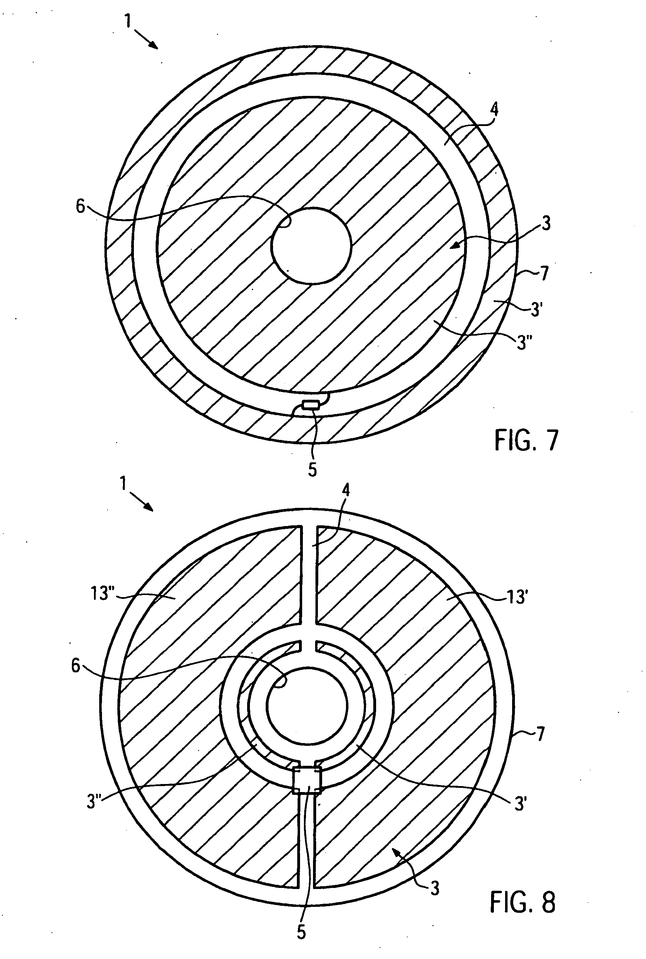

Fig. 7 shows an optical data carrier 1 according to a seventh embodiment of the present invention. Similar to the previously described embodiments, same reference signs denote same technical parts throughout the seventh embodiment.

According to the seventh embodiment the capacitive transfer of data/energy is realised such, that the non-conductive portion 4 is a closed ring and separates the conductive layer 3 into two closed ring elements 3' and 3". The chip 5 is arranged between the two closed ring elements 3', 3". Thus the antenna element comprises an inner and an outer closed ring element 3', 3" for a capacitive transfer of data and/or energy. This embodiment has a very simple structure and can be manufactured at very low costs.

Fig. 8 shows an optical data carrier according to an eighth embodiment of the present invention. Similar to the previously described embodiments, same reference signs denote same technical parts in the eighth embodiment.

The optical data carrier 1 according to the eighth embodiment mainly corresponds to the optical data carrier according to the sixth embodiment. However, contrary thereto, according to the eighth embodiment the chip 5 uses two capacitive transfer elements. More in detail, there is provided a first antenna element using the parts 3' and 3" and a second antenna element using the parts 13' and 13". All parts 3', 3", 13', 13" of the antenna element are a part of the information carrying conductive layer 3 and mainly have the shape of the half of a ring (cf. Fig. 8).

As shown in Fig. 8, contact portions of the chip 5 are formed in the corners of the chip 5, respectively to contact each single part 3', 3", 13', 13" of the information carrying conductive layer 3.

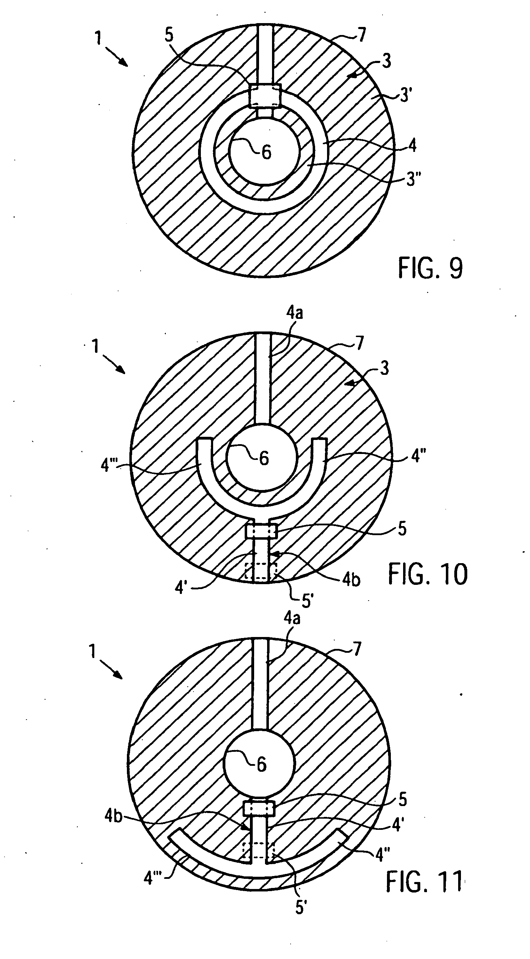

Figs. 9, 10 and 11 show optical data carriers 1 according to a ninth, a tenth and an eleventh embodiment of the present invention, wherein as in the previously described embodiments, same reference signs denote the same technical parts.

The embodiment shown in Fig. 9 uses an inductive transfer of data and/or energy and comprises an information carrying conductive layer 3, which has been separated by the non-conductive portion 4 into two parts 3', 3". Thus, the antenna element of the optical data carrier 1 according to Fig. 9 comprises two loops for a transfer. The two antenna elements have basically the form of a ring having a slit. The chip 5 is arranged at the portion, where the slits are formed in the antenna elements, wherein, as shown in Fig. 9, the two slits of the antenna elements are arranged such, that they are aligned on a common line. As shown in Fig. 9, the shape of the non-conductive portion 4 is a ring comprising an attached straight portion.

In the embodiments shown in Figs. 10 and 11, the non-conductive portion 4 comprises two parts, namely a first part 4a and a second part 4b. The first part 4a is a simply straight line from the inner edge 6 to the outer edge 7 of the information carrying conductive layer 3. The second part 4b is mainly arranged on the opposite side of the first part 4a and comprises a portion 4' in the shape of straight line and a first and a second branching portion 4" and 4"'. The branching portions 4", 4'" have an arc-like shape, wherein in the embodiment of Fig. 10, the portions 4", 4'" are arranged adjacent to the inner edge of the information carrying conductive layer 3 and in Fig. 11 the portions 4", 4'" are arranged adjacent to the outer edge of the information carrying conductive layer 3. In both embodiments shown in Figs. 10 and 11, the chip 5 is arranged on the straight portion 4', being arranged closer to the inner edge of the information carrying conductive layer 3. In Figs. 10 and 11 in dotted lines an example of another position of the chip 5' is indicated.

It has to be further noted, that according to the present invention the non-conductive portion of all described embodiments may be provided by means of a laser, a mask technique, adhesive strips, a wire or a thread which are provided before the applying of the electrically conductive layer and are then removed.

## Claims

1. Optical disc data carrier (1), having an optically readable information carrying electrically conductive layer (3) arranged on a base material (2) and a chip (5) connected to the electrically conductive layer (3), **characterized in that** the whole information carrying electrically conductive layer (3) is configured as an antenna element for transferring data and/or energy, wherein the said whole information electrically conductive layer (3) comprises at least one non-conductive portion (4).

2. Optical disc data carrier according to claim 1, **characterized in that** the transfer of data and/or energy is an inductive transfer.

3. Optical disc data carrier according to anyone of the preceding claims, **characterized in that** the antenna element formed by the electrically conductive layer (3) has basically the shape of an open ring (3').

4. Optical disc data carrier according claim 3, **characterized in that** the antenna element is arranged adjacent to a center opening (6) of the optical data carrier or arranged adjacent to an outer edge (7) of the optical data carrier.

5. Optical disc data carrier according to claim 1, **characterized in that** the transfer of data and/or energy is a capacitive transfer, wherein the electrically conductive layer (3) is separated by the non-conductive portion into at least two parts.

6. Optical disc data carrier according to claim 5, **characterized in that** the non-conductive portion has a closed ring-like shape and separates the electrically conductive layer (3) into two closed ring-like parts.

7. Optical disc data carrier according to claim 5, **characterized in that** the electrically conductive layer (3) comprises two line-like non-conductive portions separating the electrically conductive layer from the inner to the outer edge, wherein the two line-like non-conductive portions are arranged in an angle to each other for separating the electrically conductive layer (3) into two ring sector parts.

8. Optical disc data carrier according to claim 5, **characterized in that** the electrically conductive layer (3) comprises two non-conductive portions (4a, 4b) being arranged such, that they are arranged on a common line incorporating a center point of the optical data carrier.

9. Optical disc data carrier according to anyone of the preceding claims, **characterized in that** the chip (5) is arranged adjacent to the center opening (6) or adjacent to an outer edge (7) of the data carrier.

10. Optical disc data carrier according to anyone of the preceding claims, **characterized by** a counter weight (10) for an compensation of the weight of the chip (5).

11. Optical disc data carrier according to any of the preceding claims, **characterized in that** the chip (5) is connected to the information carrying electrically conductive layer (3) by means of a conductive adhesive.

12. Optical disc data carrier according to any of the preceding claims **characterized by** a first electrically conductive layer (3a) and a second electrically conductive layer (3b), wherein the second electrically conductive layer (3b) is arranged parallel to the first electrically conductive layer (3a) and wherein the first and/or the second electrically conductive layer (3a, 3b) are configured as an antenna element for transferring data and/or energy.

13. Optical disc data carrier according to anyone of the preceding claims, **characterized in that** the non-conductive portion (4) has a width of less than 300 µm, preferably less than 100 µm, more preferably approximately 75 µm.

14. Optical disc data carrier according to any of the preceding claims, **characterized in that** the chip (5) is a RFID-element.

15. Optical disc data carrier according to anyone of the preceding claims, **characterized in that** the optical data carrier is a CD or a DVD or a SACD or a blu-ray disc.

16. Method for producing an optical disc data carrier comprising an information carrying electrically conductive layer (3) arranged on a base material (2), wherein the whole information carrying electrically conductive layer (3) is configured as an antenna element, comprising the steps of:
- applying a metal material on the base material (2) for providing the information carrying electrically conductive layer (3), so that the whole of said electrically conductive layer (3) is configured as an antenna element.
- writing optically readable data on the said electrically conductive layer,
- removing metal material of the said electrically conductive layer (3) for providing at least one non-conductive portion (4) in the electrically conductive layer (3), and
- fixing a chip (5) to the said information carrying electrically conductive layer (3), preferably by means of a conductive adhesive.

17. Method according to claim 16, **characterized in that** the metal material for providing the non-conductive portion (4) is removed by means of a laser.

18. Method according to claim 16, **characterized in that** before the step of applying the metal material for the electrically conductive layer (3) a line-like auxiliary element is arranged on the base material (2), wherein the line-like auxiliary element is removed after the applying of the metal material for forming the non-conductive portion (4) of the electrically conductive layer (3).

19. Method according to claim 18, **characterized in that** the line-like auxiliary element is a wire or a thread or an adhesive strip.

## Patentansprüche

1. Scheibenförmiger optischer Datenträger (1) mit einer eine optisch lesbare Information tragenden, elektrisch leitfähigen Schicht (3), welche auf einem Grundmaterial (2) angeordnet ist, und mit einem Chip (5), welcher mit der elektrisch leitfähigen Schicht (3) verbunden ist, **dadurch gekennzeichnet, dass** die gesamte, eine Information tragende, elektrisch leitfähige Schicht (3) als ein Antennenelement zum Übertragen von Daten und/oder Energie ausgebildet ist, wobei die gesamte eine Information tragende, elektrisch leitfähige Schicht (3) wenigstens einen nicht leitfähigen Abschnitt (4) aufweist.

2. Scheibenförmiger optischer Datenträger nach Anspruch 1, **dadurch gekennzeichnet, dass** die Übertragung von Daten und/oder Energie eine induktive Übertragung ist.

3. Scheibenförmiger optischer Datenträger nach einem der vorangehenden Ansprüche, **dadurch gekennzeichnet, dass** das durch die elektrisch leitfähige Schicht (3) ausgebildete Antennenelement im Wesentlichen die Form eines offenen Ringes (3') aufweist.

4. Scheibenförmiger optischer Datenträger nach Anspruch 3, **dadurch gekennzeichnet, dass** das Antennenelement an einer zentralen Öffnung (6) des scheibenförmigen optischen Datenträgers anliegend angeordnet ist oder an einen äußeren Rand (7) des scheibenförmigen optischen Datenträgers anliegend angeordnet ist.

5. Scheibenförmiger optischer Datenträger nach Anspruch 1, **dadurch gekennzeichnet, dass** die Übertragung von Daten und/oder Energie eine kapazitive Übertragung ist, wobei die elektrisch leitfähige Schicht (3) durch den nicht leitfähigen Abschnitt in wenigstens zwei Teile aufgeteilt ist.

6. Scheibenförmiger optischer Datenträger nach Anspruch 5, **dadurch gekennzeichnet, dass** der nicht leitfähige Abschnitt eine geschlossene ringartige Form aufweist und die elektrisch leitfähige Schicht (3) in zwei geschlossene, ringartige Teile aufteilt.

7. Scheibenförmiger optischer Datenträger nach Anspruch 5, **dadurch gekennzeichnet, dass** die elektrisch leitfähige Schicht (3) zwei linienförmige, nicht leitfähige Teilbereiche aufweist, welche die elektrisch leitfähige Schicht von dem inneren zum äußeren Rand aufteilt, wobei die beiden linienförmigen, nicht leitfähigen Teilbereiche zum Aufteilen der elektrisch leitfähigen Schicht (3) in zwei Ringsektorbereiche in einem Winkel zueinander angeordnet sind.

8. Scheibenförmiger optischer Datenträger nach Anspruch 5, **dadurch gekennzeichnet, dass** die elektrisch leitfähige Schicht (3) zwei nicht leitfähige Abschnitte (4a, 4b) aufweist, welche so angeordnet sind, dass sie auf einer gemeinsamen Linie angeordnet sind, welche einen Mittelpunkt des scheibenförmigen optischen Datenträgers beinhaltet.

9. Scheibenförmiger optischer Datenträger nach einem der vorangehenden Ansprüche, **dadurch gekennzeichnet, dass** der Chip (5) an der zentralen Öffnung (6) anliegend angeordnet ist, oder an den äußeren Rand (7) des Datenträgers anliegend angeordnet ist.

10. Scheibenförmiger optischer Datenträger nach einem der vorangehenden Ansprüche, **gekennzeichnet durch** ein Gegengewicht (10) zum Kompensieren des Gewichtes des Chips (5).

11. Scheibenförmiger optischer Datenträger nach einem der vorangehenden Ansprüche, **dadurch gekennzeichnet, dass** der Chip (5) mit der eine Information tragenden, elektrisch leitfähigen Schicht (3) durch einen leitfähigen Klebstoff verbunden ist.

12. Scheibenförmiger optischer Datenträger nach einem der vorangehenden Ansprüche, **gekennzeichnet durch** eine erste elektrisch leitfähige Schicht (3a) und eine zweite elektrisch leitfähige Schicht (3b), wobei die zweite elektrisch leitfähige Schicht (3b) parallel zu der ersten elektrisch leitfähigen Schicht (3a) angeordnet ist und wobei die erste und/oder die zweite elektrisch leitfähige Schicht (3a, 3b) als ein Antennenelement zum Übertragen von Daten und/oder Energie ausgebildet sind/ist.

13. Scheibenförmiger optischer Datenträger nach einem der vorangehenden Ansprüche, **dadurch gekennzeichnet, dass** der nicht leitfähige Abschnitt (4) eine Breite von weniger als 300 µm, vorzugsweise weniger als 100 µm, noch vorteilhafter von etwa 75 µm aufweist.

14. Scheibenförmiger optischer Datenträger nach einem der vorangehenden Ansprüche, **dadurch gekennzeichnet, dass** der Chip (5) ein RFID-Element ist.

15. Scheibenförmiger optischer Datenträger nach einem der vorangehenden Ansprüche, **dadurch gekennzeichnet, dass** der scheibenförmige optische Datenträger eine CD, eine DVD, eine SACD oder eine blu-ray-Disc ist.

16. Verfahren zum Herstellen eines scheibenförmigen optischen Datenträgers mit einer eine Information führenden, elektrisch leitfähigen Schicht (3), welche auf einem Grundmaterial (2) angeordnet ist, wobei die gesamte eine Information tragende, elektrisch leitfähige Schicht (3) als Antennenelement ausgebildet ist, wobei das Verfahren die folgenden Schritte aufweist:
- Aufbringen eines metallischen Materials auf dem Grundmaterial (2) zum Bereitstellen der eine Information tragenden, elektrisch leitfähigen Schicht (3), so dass die gesamte elektrisch leitfähige Schicht (3) als ein Antennenelement ausgebildet ist,
- Schreiben von optisch lesbaren Daten auf der elektrisch leitfähigen Schicht,
- Entfernen von metallischem Material von der elektrisch leitfähigen Schicht (3) zum Bereitstellen wenigstens eines nicht leitfähigen Abschnitts (4) in der elektrisch leitfähigen Schicht (3), und
- Fixieren eines Chips (5) an der eine Information tragenden, elektrisch leitfähigen Schicht (3), vorzugsweise mithilfe eines leitfähigen Klebstoffs.

17. Verfahren gemäß Anspruch 16, **dadurch gekennzeichnet, dass** das metallische Material zum Bereitstellen des nicht leitfähigen Abschnitts (4) mithilfe eines Lasers entfernt wird.

18. Verfahren gemäß Anspruch 16, **dadurch gekennzeichnet, dass** vor dem Schritt zum Aufbringen des metallischen Materials für die elektrisch leitfähige Schicht (3) ein linienartiges Hilfselement auf dem Grundmaterial (2) angeordnet wird, wobei das linienartige Hilfselement nach dem Aufbringen des metallischen Materials zum Bilden des nicht leitfähigen Abschnitts (4) der elektrisch leitfähigen Schicht (3) entfernt wird.

19. Verfahren gemäß Anspruch 18, **dadurch gekennzeichnet, dass** in das linienartige Hilfselement ein Draht, ein Faden oder ein Klebeband ist.

## Revendications

1. Support de données de disque optique (1), possédant une couche électriquement conductrice (3) portant une information pouvant être lue optiquement disposée sur un matériau de base (2) et une puce (5) reliée à la couche électriquement conductrice (3), **caractérisé en ce que** l'ensemble de la couche électriquement conductrice (3) portant l'information est configuré en tant qu'élément d'antenne pour transférer les données et/ou l'énergie, dans lequel ladite couche électriquement conductrice globale portant l'information (3) comprend au moins une partie non conductrice (4).

2. Support de données de disque optique selon la revendication 1, **caractérisé en ce que** le transfert de données et/ou d'énergie est un transfert inductif.

3. Support de données de disque optique selon l'une quelconque des revendications précédentes, **caractérisé en ce que** l'élément d'antenne formé par la couche électriquement conductrice (3) présente fondamentalement la forme d'un anneau ouvert (3').

4. Support de données de disque optique selon la revendication 3, **caractérisé en ce que** l'élément d'antenne est disposé adjacent à une ouverture centrale (6) du support de données optiques ou disposé adjacent à un bord extérieur (7) du support de données optiques.

5. Support de données de disque optique selon la revendication 1, **caractérisé en ce que** le transfert de données et/ou d'énergie est un transfert capacitif, dans lequel la couche électriquement conductrice (3) est séparée par la partie non conductrice en au moins deux parties.

6. Support de données de disque optique selon la revendication 5, **caractérisé en ce que** la partie non conductrice présente une forme annulaire fermée par la couche électriquement conductrice (3) en deux parties de forme annulaire fermée.

7. Support de données de disque optique selon la revendication 5, **caractérisé en ce que** la couche électriquement conductrice (3) comprend deux parties non conductrices en forme de ligne séparant la couche électriquement conductrice depuis le bord intérieur vers le bord extérieur, dans lequel les deux parties non conductrices en forme de ligne sont disposées selon un angle l'une par rapport à l'autre pour séparer la couche électriquement conductrice (3) en deux parties de secteur annulaire.

8. Support de données de disque optique selon la revendication 5, **caractérisé en ce que** la couche électriquement conductrice (3) comprend deux parties non conductrices (4a, 4b) agencées de sorte qu'elles sont disposées sur une ligne commune comprenant un point central du support de données optiques.

9. Support de données de disque optique selon l'une quelconque des revendications précédentes, **caractérisé en ce que** la puce (5) est disposée adjacente à l'ouverture centrale (6) ou adjacente au bord extérieur (7) du support de données.

10. Support de données de disque optique selon l'une quelconque des revendications précédentes, **caractérisé par** un contrepoids (10) pour une compensation du poids de la puce (5).

11. Support de données de disque optique selon l'une quelconque des revendications précédentes, **caractérisé en ce que** la puce (5) est reliée à la couche électriquement conductrice portant l'information (3) au moyen d'un adhésif conducteur.

12. Support de données optiques selon l'une quelconque des revendications précédentes, **caractérisé par** une première couche électriquement conductrice (3a) et une seconde couche non conductrice (3b), dans lequel la seconde couche électriquement conductrice (3b) est disposée parallèle à la première couche électriquement conductrice (3a) et dans lequel la première et/ou la seconde couche électriquement conductrice (3a, 3b) sont configurées en tant qu'élément d'antenne pour transférer les données et/ou l'énergie.

13. Support de données de disque optique selon l'une quelconque des revendications précédentes, **caractérisé en ce que** la partie non conductrice (4) présente une largeur inférieure à 300 µm, de préférence inférieure à 100 µm, et plus préférablement d'approximativement 75 µm.

14. Support de données de disque optique selon l'une quelconque des revendications précédentes, **caractérisé en ce que** la puce (5) est un élément RFID.

15. Support de données de disque optique selon l'une quelconque des revendications précédentes, **caractérisé en ce que** le support de données optiques est un CD ou un DVD ou un SACD ou un disque blu-ray.

16. Procédé pour fabriquer un support de données de disque optique comportant une couche électriquement conductrice (3) portant une information disposée sur un matériau de base (2), dans lequel l'ensemble de la couche électriquement conductrice (3) portant l'information est configuré en tant qu'élément d'antenne, comportant les étapes consistant à :
- appliquer un matériau métallique sur le matériau de base (2) pour réaliser la couche électriquement conductrice (3) portant une information, de sorte que l'ensemble de ladite couche électriquement conductrice (3) est configuré en tant qu'élément d'antenne,
- écrire des données pouvant être lues optiquement sur ladite couche électriquement conductrice,
- enlever le matériau métallique de ladite couche électriquement conductrice (3) pour réaliser au moins une partie non conductrice (4) dans la couche électriquement conductrice (3), et
- fixer une puce (5) sur ladite couche électriquement conductrice (3) portant l'information, de préférence au moyen d'un adhésif conducteur.

17. Procédé selon la revendication 16, **caractérisé en ce que** le matériau métallique pour réaliser la partie non conductrice (4) est enlevé au moyen d'un laser.

18. Procédé selon la revendication 16, **caractérisé en ce que,** avant l'étape d'application du matériau métallique sur la couche électriquement conductrice (3), un élément auxiliaire en forme de ligne est disposé sur le matériau de base (2), dans lequel l'élément auxiliaire en forme de ligne est supprimé après l'application du matériau métallique pour former la partie non conductrice (4) de la couche électriquement conductrice (3).

19. Procédé selon la revendication 18, **caractérisé en ce que** l'élément auxiliaire en forme de ligne est un câble ou un fil ou une bande adhésive.
